# EUROPEAN PATENT SPECIFICATION

(11) **EP 4 096 567 B1**
(45) Date of publication and mention of the grant of the patent: **21.08.2024**
(21) Application number: 21702484.3
(22) Date of filing: 28.01.2021
(51) Int. Cl.: A61C 1/07, A61C 3/03, A61C 17/16, A61C 17/18, A61C 17/20

(54) **TOOL FOR A MEDICAL TREATMENT, PREFERABLY A DENTAL TREATMENT, AND METHOD FOR OPERATING SUCH A TOOL**
WERKZEUG FÜR EINE MEDIZINISCHE BEHANDLUNG, VORZUGSWEISE ZAHNÄRZTLICHE BEHANDLUNG, UND VERFAHREN ZUM BETRIEB EINES SOLCHEN WERKZEUGS
OUTIL POUR UN TRAITEMENT MÉDICAL, DE PRÉFÉRENCE UN TRAITEMENT DENTAIRE, ET MÉTHODE DE FONCTIONNEMENT D'UN TEL OUTIL

(30) Priority: 28.01.2020 EP 20154169; 28.01.2020 EP 20154168
(43) Date of publication of application: 07.12.2022
(73) Proprietor: Ferton Holding S.A., 2800 Delémont (CH)
(72) Inventor: BIENAIME, Alex, 39220 Les Rousses (FR)
(74) Representative: Müller Schupfner & Partner Patent- und Rechtsanwaltspartnerschaft mbB (Muc)
(86) International application number: PCT/EP2021/052038
(87) International publication number: WO 2021/152049

(56) References cited:
- US-A- 4 332 558
- US-A- 4 370 131
- US-A- 4 804 364
- US-A1- 2013 204 285
- US-A1- 2019 357 996

## Description

The present invention concerns a tool for a medical treatment. Particularly, the present invention concerns a tool for a medical treatment that performs a vibration movement, such as an oscillating movement during its operation. According to the invention the tool is an ultrasonic scaler that is intended for removing dental calculus during a dental treatment.

Dental calculus develops mostly in mouth areas that are difficult to access, in particular during home care treatments, for example by a toothbrush or a water spray treatment. These areas are also difficult to access during a professional care treatment, especially during scaling, and calculi formed are hard and strongly attached to the teeth.

Ultrasonic scaling instruments are well known to remove hard calculus due to their power of ultrasonic vibrations and their low impact on teeth. A removal capacity of the ultrasonic scaling instrument is achieved by their ultrasonic vibrational power. Such dental ultrasonic scaler instruments typically include a liquid irrigation having the following benefits: Firstly, this irrigation limits an undesired tissue burning caused otherwise due to the ultrasonic motion of the tool tip. Secondly, the irrigation improves a sliding effect with reduced friction coefficient of the tool tip on the dental tissue resulting in a reduced abrasion of the dental tissue and therefore in a minimal invasive treatment. Thirdly, irrigation in periodontal pockets enables a consequent cleaning.

Further, it is provided that an irrigation fluid channel passes through the transducer and consequently influences the temperature of the transducer in an advantageous manner. The irrigation is also required for the application, improving a lot the tip-teeth contact and limiting the burning risk. It is also used to rinse the treatment area, improving the treatment efficiency.

However, it turned out that the vibrational movement of the transducer, having a high frequency, influences the movement and the flow of an irrigation fluid inside the irrigation fluid channel transporting the irrigation fluid. The modified flow characteristics of the irrigation fluid inside the irrigation fluid channel, in turn, damp the vibration movement of the transducer and can even create cavities, i. e. air bubbles, which can damage the tool. Thereby, damping effects and/or cavity formations strongly depends on the operation mode of the tool.

US 4,804,364 A discloses an ultrasonic apparatus intended for the curettage of biological tissues by irrigation of a liquid subject to cavitation. In US 2013 204 285 A1 a tool for cutting tissue bodies is shown. In US 4,370,131 A an ultrasonic transducer is shown. In the subject matter of US 4,332,558 A there is in fact a tube, which is connected to a transducer, wherein the piezo elements seem to be located at the bottom side of the tree-shaped transducer. US 2019 357 996 A1 seems to deal with a dental treatment unit, used typically for treating dental pulp. Considering the above, it is therefore an object of the present invention to reduce the damping effects of the irrigation fluid on the vibration movement of the transducer and also to reduce the probability of cavity or bubble formation inside the irrigation fluid channel, which could damage the tool.

This object is achieved by the tool according to claim 1 .Preferred embodiments are incorporated in the dependent claims, the description and the figures.

According to the present invention a tool for a dental treatment namely a scaler, is provided comprising a transducer having at least one piezo element for causing a vibration movement along a vibration direction in a vibrating state,
wherein the transducer, in particular a sonotrode of the transducer, includes an irrigation fluid channel for transporting an irrigation fluid,
wherein the tool comprises a channel modifying section, being passed by the irrigation fluid during operation of the tool, the channel modifying section being formed by
   -- an inner wall section of the irrigation fluid channel being slanted relative to the vibration direction about an angle between 30° and 150° and/or
   -- an interface between a supply line and the irrigation fluid channel of the transducer,
wherein for reducing an influence of a vibration of the transducer to the irrigation fluid during operation of the tool a ratio of

- a distance between the channel modifying section and the at least one piezo element measured in a direction parallel to the vibration direction to
- a total length of the transducer, measured in a direction parallel to the vibration direction, is smaller than 0.15 and preferably smaller than 0.1

Contrary to the state of the art, the channel modifying section, i. e. such a section, being prone for affecting the streaming or flow behaviour of the irrigation fluid, is arranged close to the piezo element, i. e. close to a node of the vibration movement of the transducer. Close to the node of the vibration mode, an amplitude of the vibrational movement of the transducer is limited and, therefore, the influence of the vibrational movement on the flow characteristics of the irrigation fluid, being transported inside of the irrigation fluid channel, can be reduced in an advantageous manner. As a result, damping effects on the transducer caused by the flow characteristics of the irrigation fluid can be reduced. Channel modifying sections are preferably such sections, which are prone for influencing the flow characteristics of the irrigation fluid inside the fluid irrigation channel. Especially, channel modifying sections are formed by inner wall sections, which do not extend parallel to the flow direction or transport direction. Such walls protruding into the fluid channel directly influence the flow of the irrigation fluid, when the transducer vibrates. For example, the channel modifying sections is formed by a size change of the channel, in particular by a step-like course in the inner side wall of the irrigation fluid channel or an interface between the irrigational fluid section and the supply line, which provides the irrigation fluid to the irrigation fluid channel of the transducer. Furthermore, it turned out that the arrangement of the channel modification section, in particular of the interface of the supply line, close to or at the node of vibration reduces the probability for shifting a laminar stream to a turbulent stream in the transported fluid, the shift from laminar to turbulent otherwise typically causing a cavitation inside the fluid. Thus the stability of the tool during it use is improved. In other words: Section restriction or constriction of the fluid channel at high vibration locations, being a source of unstabilities due to modification on fluid behavior (cavitation and changes of flow conditions (laminar to turbulent)), are avoided. This is done by transferring the US motion of the transducer to the fluid only by shear boundary conditions, which have no or only a small effect, contrary to expansion/dilation generating by section restriction, which modify drastically the fluid behavior, for example by generating cavitation and inducing shift to laminar to turbulent flow.

It turned out that fluid and the ultrasonic vibration of the US (ultrasound) transducer have a reciprocal influence according to the channel geometry and preferably to the activation power of the US transducer and to the fluid passing through the transducer. For reducing this reciprocal influence, in particular further reducing the reciprocal influence, it is preferably provided that a contact area between channel and fluid is reduced, in particular by using a channel diameter as small as possible. For example the diameter has a size of 1.2 mm over a length of 50 mm.

As a result, the settings for the fluid and the transducer, in particular its power of a driving unit, have no effect on the vibrational motion, simplifying the electronic regulation of the ultrasonic device and inducing a more stable vibration. It is also possible to establish a new regulation strategy by improving the signal to noise ratio by erasing the water effect on the electronic signal.

In addition, it is possible to delete a contact with the countermass, reducing again losses (by allowing a free vibration of this part).

In particular, it is provided that the transducer includes the at least one piezo element, which translates an electric energy to a tiny extension of the at least one piezo element for causing the vibrational movement. In particular, several piezo elements are stacked above each other and are formed preferably as a ring. Especially, the transducer is a Langevin transducer. Furthermore, the transducer includes a back mass and a sonotrode, the at least one piezo element or the stack of piezo elements are arranged between the back mass and the sonotrode. While a weight of the back mass is significantly greater than a mass of the sonotrode, the node of the vibrational movement of the transducer is close to the piezo elements. Especially, the total length of the transducers is measured between the front sides of the sonotrode and the back mass, which form the front sides of the transducer, in a direction parallel to the vibration direction. For example, the irrigation fluid is water.

Preferably, the irrigation fluid channel comprises a section being free of a channel modification, extending from the channel modifying section to a distal end of the irrigation channel. In other words: the transducer, in particular the sonotrode, is mainly free from sections being prone for affecting the flow characteristics of the irrigation fluid inside the irrigation fluid channel by the vibrational movement of the sonotrode in the sections being spaced from the node. This is for example realized by an irrigation fluid channel having a mainly constant cross section. By avoiding a channel modifying section in the section being free of a channel modification, it is in particular provided that there are no channel modifying sections in those sections of the sonotrode experiencing a high amplitude during operation. As a consequence, the sections experiencing a high amplitude during operation do not affect the flow characteristics of the irrigation fluid inside the irrigation fluid channel. As a result, these section cannot strongly contribute to a damping effect or the cavity formation.

Preferably, it is provided that the irrigation fluid channel has a cross section perpendicular to the vibration direction, wherein the cross section of the section being free of channel modification has an extension being smaller than 2 mm, preferably smaller than 1 mm and more preferably smaller than 0.75 mm. As a consequence, the surface area, which interacts with the irrigation fluid in operation is further reduced due to the very small diameter of the section being free of a channel modification of the irrigation fluid channel.

According to the invention it is provided that a ratio of an extension including all channel modifying sections to a total length of the transducer is smaller than 0.15. In other words: The channel modifying sections, i. e. sections being prone for an interaction with the irrigation fluid channel, are limited to a very narrow region, being in particular located close to the node, which is assigned to the vibration movement in operation of the tool.

According to the invention a supply line is provided, which supplies the irrigation fluid channel of the sonotrode with the irrigation fluid, passes through the piezo elements andr a back mass of the transducer. In other words: the supply line is not connected to a rear end or proximal front side of the backmass. As a consequence, it is possible to locate the interface section between the supply line and the irrigation fluid channel as close as possible to the node. Since the interface section represents another channel modifying section, it is possible to reduce the effect of such an interface between the irrigation fluid channel and the supply line on the transported irrigation fluid channel. The location of the interface section is preferably set by a plane, in which the irrigation fluid exits the supply line and enters the irrigation fluid channel.

Preferably, it is provided that an irrigation outlet is arranged at the end of the irrigation fluid channel for ejecting the irrigation fluid along the ejection direction, wherein preferably a ratio of a diameter of the irrigation fluid channel to the length of the section being free of channel modification has a value between 0,01 and 0,04, preferably between 0,02 and 0,03 or more preferably between 0,02 and 0,025. The ratio corresponds to a limited irrigation fluid channel diameter, which advantageously reduces the contacting surface between water and the transducer. As a result, the damping effect and instabilities can further decreased.

Furthermore, it is provided that the supply line is inserted into a proximal end of the transducer, in particular, the proximal end of the sonotrode. Especially, the proximal end represents the rear end of the sonotrode and by inserting the supply line to the proximal end of the sonotrode, it is possible to locate the interface section or channel modifying section between the supply line and the irrigation fluid channel as close as possible to the node of the transducer. Otherwise, the interface section would be located at the proximal end of the back mass, facing away from the piezo element. Preferably, the supply line and the sonotrode are connected with each other via a force fitting and/or form fitting connection.

Preferably, a sealing element, such as an O-ring, is arranged
- between the inserted part of the supply line and the transducer, in particular, the sonotrode and/or
- at a node of the vibration during operation. Especially, the sealing element is arranged inside a pot-like recess at the proximal front side of the sonotrode, in particular at the bottom of the pot-like recess, for guaranteeing a sealed connection between the transducer and the supply line for avoiding an irrigation fluid leakage, which could damage the tool. Preferably, the sealing element is elastic for realizing an additional form-fitting connection between the transducer and the supply line. Arranging the sealing element at a vibration node reduces the damping of the US motion. As a result, due to the reduced vibration at the node the risk of water-leakage is reduced compared to state of the art configurations having a sealing means being arranged at an antinode of the vibration.

It is further possible to increase a biocompatibility of the tool by using a full grade o-ring (silicone material) to ensure the waterproofness compared to a glue, which requires additional test to prove the biocompatibility

Preferably, the supply line is included into a plug element having at least one radially extending protrusion, in particular in form of a strut or web element. Such a strut or web element can be used for pushing the transducer during the assembling of the tool, such as inserting the transducer into the housing. On the other side, the plug element being used at the rear end of the housing of the tool is not made massive due to the protrusions such that the weight of the tool can be reduced in an advantageous manner. Preferably the plug element and/or the supply line are rigid. i. e. no flexible hose.

Preferably, it is provided that at the rear end of the tool, i. e. at the proximal end of the tool, a connector element is arranged, wherein preferably the connector element is connected to the plug element having the supply line, in particular by means of the at least one radially extending protrusion for avoiding a relative rotation about an axis being parallel to the vibration direction. In particular, the connector is connected to the supply line via the plug element, which includes the supply line.

Further it is provided that in the assembled state, there is a free space between the plug element and the back mass in a direction parallel to the vibration direction This free space is especially configured to allow a small vibrational movement of the back mass without contacting the plug element during vibration. As a consequence, the plug element does not influence the vibration in the transducer.

Preferably, the tool is a scaler. Especially, the tool tip is connected to the sonotrode via a press-fit connection. Furthermore, it is provided that a tool tip is connected to the transducer in an interface section, in particular to a sonotrode of the transducer, the tool tip extending along an extending direction, in particular along a straight extending direction in a non-vibrating state. The specific design of the tool tip allows avoiding a screw mechanism, which is known from the prior art to connect the tool tip to the transducer. However, such a screwing mechanism automatically leads to a design having a channel modifying section at the screw section via which the tool tip is screwed to the transducer.

Furthermore, it is provided that the term "transducer" includes an adaptor, which can be interchangeable connected to the sonotrode. Preferably, it is provided that the tool tip can be inserted into the transducer or the adaptor by a press fit connection.

Another aspect of the present disclosure, not forming part of the invention, is a method for operating a tool according to the present invention. All benefits and specifics being mentioned and discussed in context of the tool applies analogously for the method for operating the tool.

Another aspect of the present disclosure, not forming part of the invention, is a method for assembling a tool according to the present invention. All benefits and specifics being mentioned and discussed in context of the tool applies analogously for the method for operating the tool.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates a tool for medical treatment according to the state of the art,
- **Fig. 2**: schematically illustrates another tool for medical treatment according to the state of the art,
- **Fig. 3**: schematically illustrates a tool for medical treatment according to a preferred embodiment of the present invention,
- **Fig. 4**: schematically illustrates a distal section of the tool of figure 3 and
- **Fig. 5**: schematically illustrates a proximal section of the tool of figure 3.

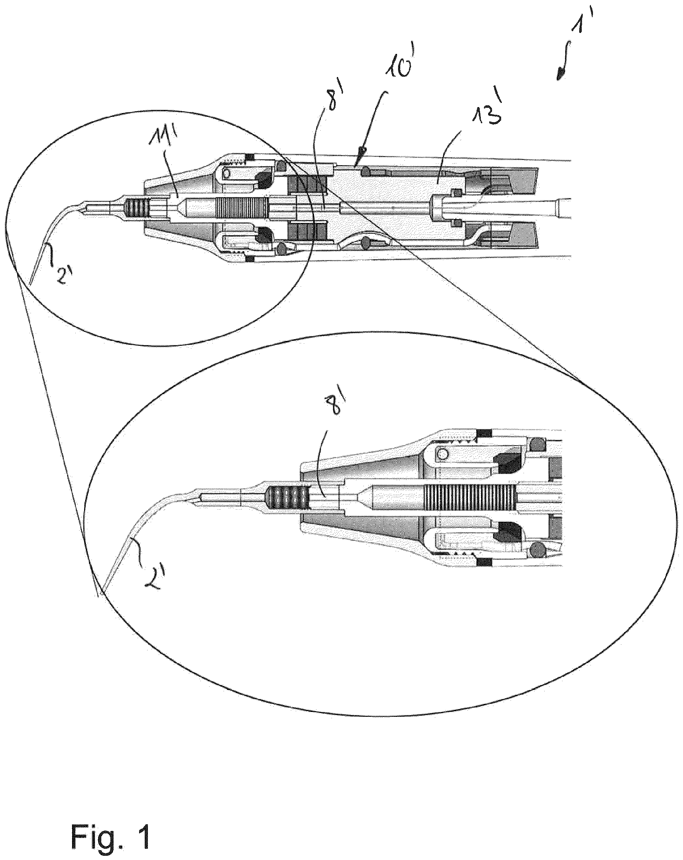

In **Figure 1** schematically a tool 1' for a medical treatment according to the state of the art in a cross sectional view is shown. Especially, Figure 1 illustrates a tool 1' for a dental treatment, in particular a scaler for removing dental calculus. Such a tool 1' uses a vibration movement, in particular an ultrasound vibration movement, for moving a tool tip 2' such that the tool tip 2', located at or next to dental calculus at a tooth, removes said dental calculus from the tooth being treated during operation. Preferably, the tool 1' includes a transducer 10', in particular being intended to cause the ultrasound vibration movement along a vibration direction VD. Especially, the transducer 10' includes at least one piezo element 12, preferably a stack 12' of piezo elements 12. These piezo elements 12 are typically configured such that an electrical energy can be translated to a small expansion of the piezo element 12 in vibration direction VD that creates the ultrasound vibration movement of the tool tip 2'. Besides the piezo elements 12 the transducer 10' comprises a back mass 13' and a sonotrode 11', the sonotrode 11' being coupled to the tool tip 2'. It is also conceivable that the transducer 10' includes an adapter for mounting the tool tip 2' to the sonotrode 11'. Preferably, the stack 12' of piezo elements 12 is located between the sonotrode 11' and the back mass 13'.

In particular, the transducer 10' is a Langevin transducer, causing a vibration motion having a maximum amplitude at the front sides of the transducer 10', especially at the front sides of the sonotrode 11' and the back mass 13', i. e. the front sides of the sonotrode 11' and back mass 13' facing away from each other. In the near of the piezo element 12 or the stack 12' or the piezo elements a vibration node of the established vibration is established during operating the tool 1'. Thereby, in Figure 1 the tool tip 2' is represented by a scaler that interacts with a surface of a tooth, in particular its outside, during operation.

Furthermore, the tool 1 comprises an irrigation fluid channel 8' for transporting an irrigation fluid to the tool tip 2'. In particular, it is provided that the irrigation fluid channel 8 passes through the transducer 10'. Thus, the irrigation fluid, being transported during operation to the tool tip 2', can be used for tip irrigation as well as for temperature limitation, i. e. for cooling the transducer 10'. However, such an irrigation fluid influences the vibration movement of the transducer 10'. In particular, it turned out that the irrigation fluid passing through the transducer 10' can establish different states such as laminar, turbulent or a state, in which a cavitation is formed. These kinds of states of the flow inside the irrigation fluid channel 8 can influence the vibration motion of the transducer 10'. Especially, it turned out that at high amplitudes and high frequency cavities, i. e. bubbles are formed, which can damage the tool 1, because shock waves during bubble apparition have a strong energy locally and can destroy material.

Furthermore, the different states although have a damping effect on the vibration movement, which is a disadvantage. Regions being prone for cavity formation or generating a flow of the irrigation fluid, which damps the vibration movement of the transducer 10', are for example slanted inner wall sides of the irrigation fluid channel 8' or an interface section, the interface section being used to supply the irrigation fluid channel 8' with the irrigation fluid from a supply line 9'. As interface section, the region is meant, in which the fluid exits the supply line 9' and enters the irrigation fluid channel 8'.

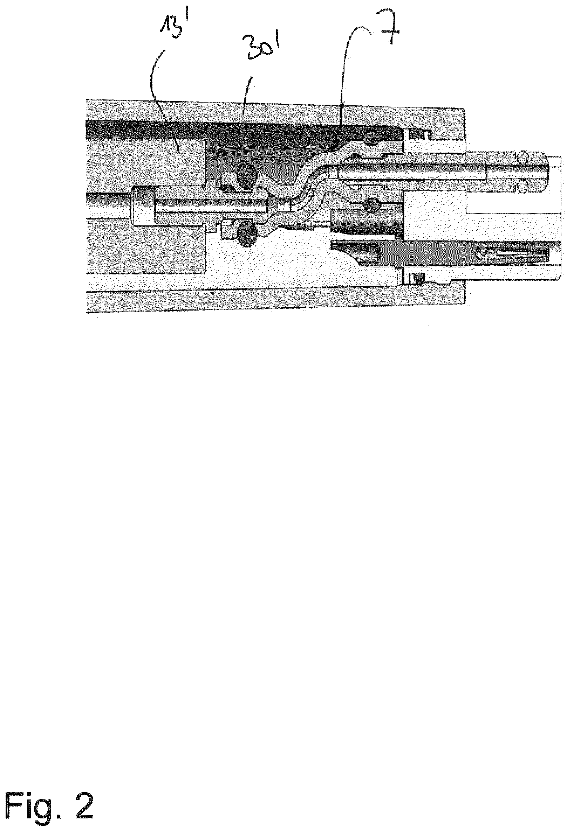

In **Figure 2**, the interface section between the supply line 9' and the irrigation fluid channel 8 'in a tool 1' according to the state of the art is illustrated. In the state of the art, the interface section is located at the rear end of the back mass 13' and is realized by a flexible hose 7. As a result of the high amplitude of the back mass 13', the rear end or distal end of the transducer 10' is prone for generating a flow inside the transported irrigation fluid, which negatively effects the vibration movement of the transducer, in particular by damping the vibrational movement.

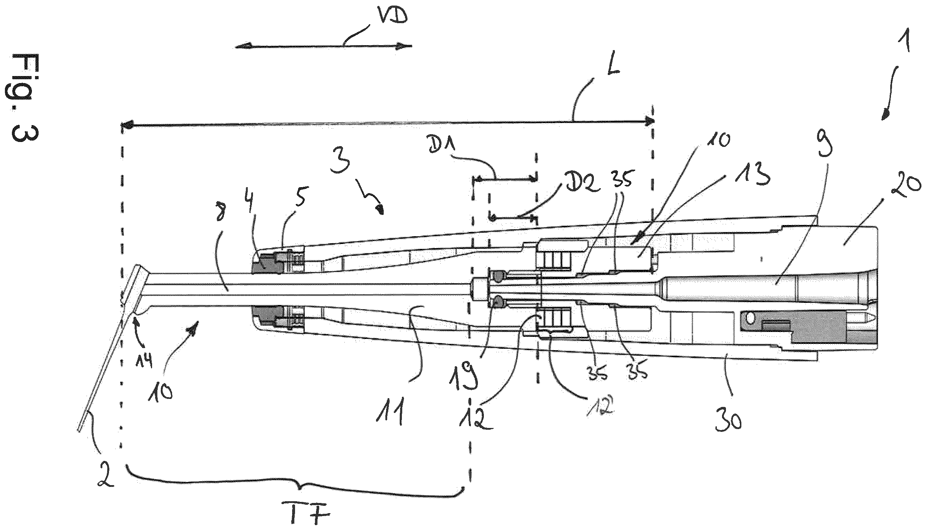

In **Figure 3**, a tool 1 according to a preferred embodiment of the present invention is shown. In particular, it is intended to provide a tool 1 that reduces the probability of cavity or bubble formation inside of the irrigation fluid channel 8 and/or reduces the probability for formation of a flow of the irrigation fluid that damps the vibration movement of the transducer 10. For having the desired flow of the irrigation fluid, it is provided preferably that a channel modifying section 21, 22 is located close to a node of the vibration of the transducer 10. Channel modifying sections 21, 22 are those sections, which are prone for strongly influencing the flow characteristics of the irrigation fluid. For example, a channel modifying section 21 is formed by an inner side wall of the irrigation fluid channel 8, being slanted relatively to the vibrational direction VD about an angle between 30° and 90° or even 170°. Such step-like inner wall sections typically influence the flow of the irrigation fluid, since they transfer their vibrational movement parallel to the vibration direction VD to the fluid. Such a channel modifying section 21, 22 however is necessary to reduce the cross section of the irrigation fluid channel 8 and can in general be not avoided.

Another example for a channel modifying section 22 is the interface section between the irrigation fluid channel 8 of the transducer 10 and a supply line 9, which supplies the irrigation fluid channel 8 with the irrigation fluid. By locating such channel modifying sections 21, 22 close to the node of the vibration mode of the transducer 10, the section being prone for affecting the movement of the irrigation fluid strongly is limited to such regions, which do not perform oscillation movements of high amplitude. Due to the reduced amplitude of oscillation in such region, the effect on the transported irrigation fluid is reduced and, therefore, the damping effect on the vibrational movement of the transducer 10 is reduced as well as the probability of cavity formation inside the transported irrigation fluid.

According to the invention it is provided that a ratio between a distance D1, D2 between the channel modifying section 21, 22 and the piezo element 12 measured in a direction parallel to the vibration direction VD to a total length L of the transducer 10, measured in a direction parallel to the vibration direction VD is smaller than 0.15 and more preferably smaller than 0.1. Because of the relative high mass of the back mass 13, the node of the vibration mode is located close to the piezo element 12, preferably the stack 12' of piezo elements 12. As a result, the distance D1, D2 of the channel modifying section 21, 22 being close to the piezo element 12 corresponds to a location of the channel modifying sections 21, 22 being close to the node of the vibration mode of the transducer 10.

Especially, it is provided that the total length L is given by the extension of the transducer 10 between the front sides of the transducer 10, namely the front sides of the sonotrode 11 and the back mass 13, being opposite to each other along a direction parallel to the vibration direction VD. Especially, the tool 1 forms an irrigation outlet 14 for ejecting the irrigation fluid at the end of the irrigation fluid channel 8.

Furthermore, it is provided that the supply line 9 passes through the back mass 13 of the transducer 10 and is inserted inside a rear/proximal end of the sonotrode 11 in the assembled state. Thus, it is possible to locate the interface section between the supply line 9 and the piezo element 12 very close to the node of the vibration in the transducer 10. In particular, it is provided that the supply line 9 is inserted in a recess, preferably a pot-like recess, at the rear/proximal end of the sonotrode 11. In particular, the supply line 9 is integrated inside a plug element 20, which can be plugged into the rear end of the transducer 10. For sealing and avoiding irrigation fluid, which exits the supply line 9 and/or the irrigation fluid channel 8, a sealing element 19, such as an O-ring, is placed at a bottom of the pot-like recess at the rear end of the sonotrode 11. The sealing element 19 contacts the distal end section of the plug element 20 at the outside in a sealing matter.

Furthermore, it is provided that the transducer 10 and the plug-in element 20 are at least partially integrated inside a housing 30. Especially, the housing 30 surrounds the part of the transducer 10 including the rear/proximal end of the sonotrode 11, the stack 12' of piezo elements 12 and the back mass 13.

Furthermore, it is provided that at the distal end of the housing 30 a filling element 4 and a cap 5 are provided. The filling element 4 establishes a sealing at the opening of the housing 30 at its distal end. The cap 5 covers both the filing element 4 and the opening of the housing 30 at its distal end.

In particular, it is provided that the transducer 10 includes a section TF being free of a channel modification outside the section, which extends from the piezo element 12 to the channel modifying section 21, 22. In other words: There are no further channel modifying sections 21, 22, for example in the sonotrode 11 downstream to the channel modifying sections 21,22, being close to the node of the transducer 10. As a consequence, the transducer 10 of the tool 1 of the present invention, for example includes a step-free and thin irrigation fluid channel 8 having no step-like reduction of the cross section extending perpendicular to the vibration direction VD of the tool 1. Preferably, the cross section of the section TF being free of channel modification has an extension being smaller than 2 mm, preferably smaller than 1 mm and preferably smaller than 0.75 mm. As a consequence, the surface, interacting with the fluid, is significantly reduced and, therefore, the vibration movement of the transducer 10 does not affect the irrigation fluid flow in such sections of the transducer 10 having a high amplitude of vibration.

Further it is provided that in the assembled state, there is a free space 35 between the plug element 20 and the back mass 13 in a direction parallel to the vibration direction VD. This free space 35 is especially configured to allow a small vibrational movement of the back mass 13 without contacting the plug element 20 during vibration. As a consequence, the plug element 20 does not influence the vibration of the transducer 10.

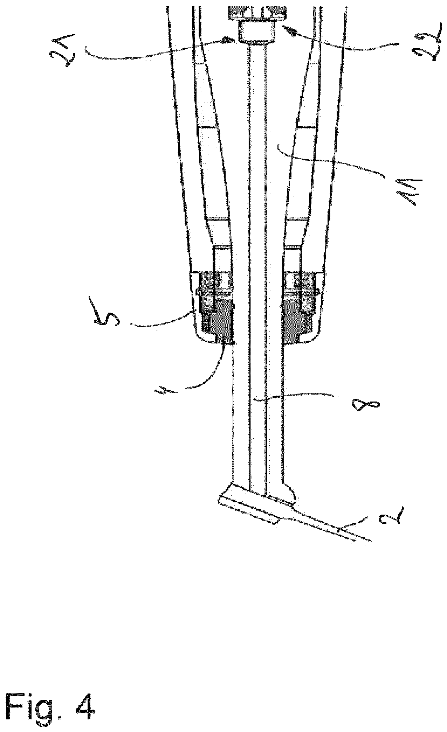

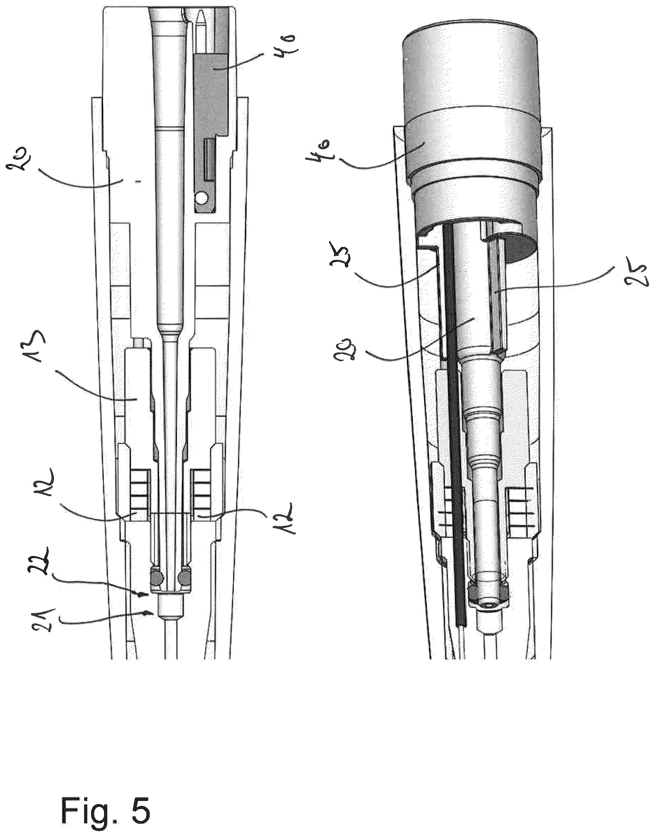

In **Figure 4****,** a detailed view of the tool 1 of figure 3 is shown including the channel modifying sections 21, 22 as well as the opening of the housing 30 at its distal end having the filling material 4 and the cap 5. In **Figure 5****,** the proximal end of a handpiece 3 of the tool of figure 3 is shown in a cross section view (top) and in a perspective view (bottom). In particular, in addition to the supply line 9, extending centrally through the housing 30, it is provided that the plug element 20 is connected to a connector element 40 for electrical communication between the tool and an external control device. Especially, the perspective view shows that the plug element 20 has protrusions 25 which protrude radially from the outside of the plug element 20. Preferably, there are three strut elements forming the protrusions, being arranged at equal distances along a circumferential direction. These strut elements can be used for pushing the transducer 10 into the proper location during assembling the tool 1. Furthermore, it is provided that the strut elements 25 are inserted inside corresponding recesses of the connector element 40 for connecting the plug-in element 20 and the connector 40.

Especially, the tool tip 2 is formed as a non-bent component. In other words: the tool tip 2 extends along an extending direction in form of a needle, i. e. the tool tip 2 has a straight course along the extension direction from a inserting section at a proximal end, being inserted into a recess in the interface section, to a pointed tip at the distal end of the tool tip 2. As a consequence, the tool tip 2 differs from the scaler tips known by the prior art that are typically bent for meeting the requirement that the tool tip 2 is curved forming an angle of around 120° relative to the vibration direction, in particular for meeting the requirements that are defined by an oral cavity geometry.

However, instead of using a screw section, which allows connecting the tool tip 2 to the sontrode 11 by a screw mechanism, it is provided according to the embodiment shown in figure 1 to connect the tool tip 2 to the sonotrode in an interface section, in particular without a screwing mechanism. Preferably, the tool tip 2 is connected to the sonotrode 11 in the interface section 1 by a frictional-fitting and/or form-fitting, in particular without a screwing mechanism. Especially, the tool tip 2 is connected to the interface section of the sonotrode 11 by a press fit connection. Depending on a strength of the press fit, the tool tip 2 is arranged or connected to the sonotrode permanently or non-permanently, for example.

Furthermore, it is provided that the tool tip 2 is inserted in a recess, wherein the recess is included in the sonotrode 11. Thereby, the tool tip 2 extends in an extending direction being slanted relative to the vibration direction VD in the interface section. It turned out that by connecting a non-bent tool tip 2 such to the sonotrode 11 that the tool tip 2 itself extends slanted to the vibration direction VD of the sonotrode 11, it is possible to transfer the vibrational movement from the sonotrode 11 to the tool tip 2 in a more efficient way, compared to those scalers having a screw section for screwing the tool tip 2 to the sonotrode 11 of the tool.

Another benefit of using a non-bent, i. e. needle-like, tool tip 2 is the possibility of relying on new or different materials that, for example, are not able to be bent in a way sufficient to realize a bent tool tip 2 in form of a scaler of the prior art. Preferably, the extending direction and the vibration direction VD of the tool 1 having the non-bent tool tip 2 form an angle that mainly corresponds to 120°, for meeting the requirements, being defined by the oral cavity geometry.

### Reference signs:

- 1: tool
- 1': tool
- 2: tool tip
- 2': tool tip
- 4: filling element
- 5: cap
- 7: hose
- 8: irrigation fluid channel
- 8': irrigation fluid channel
- 9: supply line
- 10: transducer
- 10': transducer
- 11: sonotrode
- 11': sonotrode
- 12: piezo element
- 12': stack of piezo element
- 13: back mass
- 13': back mass
- 14: irrigation outlet
- 19: sealing element
- 20: plug element
- 21, 22: channel modifying section
- 25: protrusion
- 30: housing
- 30': housing of the state of the art
- 35: free space
- 40: connector
- D1,D2: distance
- L: Length of transducer
- TF: section being free of channel modification

## Claims

1. A tool (1) for a dental treatment, namely a scaler, comprising a transducer (10) having at least one piezo element (12) for causing a vibration movement along a vibration direction (VD) in a vibrating state,
wherein the transducer (10), in particular a sonotrode (11) of the transducer (10), includes an irrigation fluid channel (8) for transporting an irrigation fluid, wherein a supply line (9) passes through the transducer (10) and
wherein an interface between the supply line (9) and the irrigation fluid channel (8) of the transducer (10) is located downstream to the at least one piezo element (12), wherein the supply line (9) passes through a back mass (13) of the transducer,
wherein the tool (1) comprises a channel modifying section (21, 22) being passed by the irrigation fluid during operation of the tool (1),
the channel modifying section (21, 22) being formed by
-- an inner wall section of the irrigation fluid channel (8) being slanted relative to the vibration direction (VD) about an angle between 30° and 150°
and/or
-- an interface between a supply line (9) and the irrigation fluid channel (18) of the transducer (10),
wherein for reducing an influence of a vibration of the transducer to the irrigation fluid during the operation of the tool (1) a ratio of
- a distance (D1, D2) between the channel modifying section (21, 22) and the at least one piezo element (12), measured in a direction parallel to the vibration direction (VD) to
- a total length (L) of the transducer (10), measured in a direction parallel to the vibration direction (VD),
is smaller than 0.15 and preferably smaller than 0.1.

2. The tool (1) according to claim 1, wherein the irrigation fluid channel (8) comprises a section being free of a channel modification (TF) extending from the channel modifying section (21, 22) to a distal end of the irrigation fluid channel (8).

3. The tool (1) according to claim 2, wherein the irrigation fluid channel (8) has a cross section in a plane perpendicular to the vibration direction (VD) ,
wherein the cross section of the section being free of a channel modification (TF) has an extension being smaller than 2 mm, preferably smaller than 1 mm and more preferably smaller than 0.75 mm.

4. The tool (1) according to claim 2 or 3, wherein a ratio between an extension of the channel modifying sections (21, 22) to a total length (L) of the transducer (10) is smaller than 0.25, preferably smaller than 0.2 and more preferably smaller than 0.15.

5. The tool (1) according to one of the preceding claims, wherein an irrigation outlet (14) is arranged at the end of the irrigation fluid channel (8) for ejecting the irrigation fluid along an ejecting direction, wherein preferably a ratio of a diameter of the irrigation fluid channel (8) to a length of the section being free of channel modification (TF) has a value between 0,01 and 0,04, preferably between 0,02 and 0,03 or more preferably between 0,02 and 0,025.

6. The tool (1) according to one of the preceding claims, wherein the supply line (9) is inserted into a proximal front side of the transducer (10), in particular the proximal front side of the sonotrode (11).

7. The tool (1) according to claim 6, wherein a sealing element (19), such as an O-ring, is arranged
- between the inserted part of the supply line (9) and transducer (10), in particular the sonotrode (11) and/or
- at a node of the vibration during operation.

8. The tool (1) according to one of the preceding claims, wherein a plug element (20) including the supply line (9) comprises at least one radially extending protrusion (25).

9. The tool (1) according to claim 8, wherein at the rear end of the tool (1) a connector element (40) is arranged, wherein preferably the connector element (40) is connected to the plug element (20), in particular via the at least one radially extending protrusion (25).

10. The tool (1) according to one of the preceding claims, wherein a free space (35) is arrange between the plug element (20) and the back mass (13) in a direction parallel to the vibration direction (VD).

11. The tool (1) according to one of the preceding claims, wherein the tool tip (2) is connect to the sonotrode (11) by a press-fit connection or in a permanent manner.

12. The tool (1) according to one of the preceding claims, wherein the tool tip (2) is non-bended.

## Patentansprüche

1. Instrument (1) für eine zahnärztliche Behandlung, nämlich eine Sonde, das einen Wandler (10) mit mindestens einem Piezoelement (12) aufweist, um eine Vibrationsbewegung entlang einer Vibrationsrichtung (VD) in einem vibrierenden Zustand zu verursachen,
wobei der Wandler (10), insbesondere eine Sonotrode (11) des Wandlers (10), einen Spülflüssigkeitskanal (8) zum Leiten einer Spülflüssigkeit einschließt, wobei eine Versorgungsleitung (9) durch den Wandler (10) führt und wobei eine Schnittstelle zwischen der Versorgungsleitung (9) und dem Spülflüssigkeitskanal (8) des Wandlers (10) stromabwärts von dem mindestens einen Piezoelement (12) angeordnet ist, wobei die Versorgungsleitung (9) durch eine Massestück (13) des Wandlers führt,
wobei das Werkzeug (1) einen kanalverändernden Abschnitt (21, 22) aufweist, der während der Verwendung des Instruments (1) von der Spülflüssigkeit durchströmt wird,
wobei der kanalverändernde Abschnitt (21, 22) gebildet wird durch
- einen inneren Wandabschnitt des Spülflüssigkeitskanals (8), der relativ zur Vibrationsrichtung (VD) um einen Winkel zwischen 30° und 150° geneigt ist und/oder
- eine Schnittstelle zwischen einer Versorgungsleitung (9) und dem Spülflüssigkeitskanal (18) des Wandlers (10),
wobei zur Verringerung eines Einflusses einer Vibration des Wandlers auf die Spülflüssigkeit während der Verwendung des Instruments (1) ein Verhältnis von
- einem Abstand (D1, D2) zwischen dem kanalverändernden Abschnitt (21, 22) und dem mindestens einen Piezoelement (12), gemessen in einer Richtung parallel zur Vibrationsrichtung (VD) zu
- einer Gesamtlänge (L) des Wandlers (10), gemessen in einer Richtung parallel zur Vibrationsrichtung (VD),
kleiner als 0,15 und vorzugsweise kleiner als 0,1 ist.

2. Instrument (1) nach Anspruch 1, wobei der Spülflüssigkeitskanal (8) einen Abschnitt aufweist, der keine Kanalveränderung (TF) umfasst und sich von dem kanalverändernden Abschnitt (21, 22) zu einem distalen Ende des Spülflüssigkeitskanals (8) erstreckt.

3. Instrument (1) nach Anspruch 2, wobei der Spülflüssigkeitskanal (8) einen Querschnitt in einer Ebene senkrecht zur Vibrationsrichtung (VD) aufweist, wobei der Querschnitt des Abschnitts, der keine Kanalveränderung (TF) umfasst, eine Erstreckung aufweist, die kleiner als 2 mm, bevorzugt kleiner als 1 mm und besonders bevorzugt kleiner als 0,75 mm ist.

4. Instrument (1) nach Anspruch 2 oder 3, wobei ein Verhältnis zwischen einer Erstreckung der kanalverändernden Abschnitte (21, 22) zu einer Gesamtlänge (L) des Wandlers (10) kleiner als 0,25, bevorzugt kleiner als 0,2 und besonders bevorzugt kleiner als 0,15 ist.

5. Instrument (1) nach einem der vorangehenden Ansprüche, wobei am Ende des Spülflüssigkeitskanals (8) ein Spülungsauslass (14) zum Ausstoßen der Spülflüssigkeit entlang einer Ausstoßrichtung angeordnet ist, wobei besonders bevorzugt ein Verhältnis eines Durchmessers des Spülflüssigkeitskanals (8) zu einer Länge des Abschnitts, der frei von Kanalveränderung (TF) ist, einen Wert zwischen 0,01 und 0,04, bevorzugt zwischen 0,02 und 0,03 oder besonders bevorzugt zwischen 0,02 und 0,025 aufweist.

6. Instrument (1) nach einem der vorangehenden Ansprüche, wobei die Versorgungsleitung (9) in eine proximale Vorderseite des Wandlers (10), insbesondere in die proximale Vorderseite der Sonotrode (11), eingeführt ist.

7. Instrument (1) nach Anspruch 6, wobei ein Dichtungselement (19), wie ein O-Ring,
- zwischen dem eingeführten Teil der Versorgungsleitung (9) und dem Wandler (10), insbesondere der Sonotrode (11) und/oder
- an einem während der Verwendung auftretenden Vibrationspunkt angeordnet ist.

8. Instrument (1) nach einem der vorangehenden Ansprüche, wobei ein die Versorgungsleitung (9) einschließendes Verschlusselement (20) mindestens einen radial verlaufenden Vorsprung (25) aufweist.

9. Instrument (1) nach Anspruch 8, wobei am hinteren Ende des Instruments (1) ein Verbindungselement (40) angeordnet ist, wobei vorzugsweise das Verbindungselement (40) mit dem Verschlusselement (20) verbunden ist, insbesondere über den mindestens einen radial erstreckenden Vorsprung (25).

10. Instrument (1) nach einem der vorangehenden Ansprüche, wobei ein Freiraum (35) zwischen dem Verschlusselement (20) und dem Massestück (13) in einer Richtung parallel zur Vibrationsrichtung (VD) angeordnet ist.

11. Instrument (1) nach einem der vorangehenden Ansprüche, wobei die Werkzeugspitze (2) mit der Sonotrode (11) durch eine Presspassung oder auf dauerhafte Weise verbunden ist.

12. Instrument (1) nach einem der vorangehenden Ansprüche, wobei die Werkzeugspitze (2) nicht gebogen ist.

## Revendications

1. Outil (1) pour un traitement dentaire, à savoir détartreur, comprenant un transducteur (10) ayant au moins un élément piézoélectrique (12) pour provoquer un mouvement vibratoire le long d'une direction de vibration (VD) dans un état vibrant,
dans lequel
le transducteur (10), en particulier une sonotrode (11) du transducteur (10), comprend un canal de fluide d'irrigation (8) pour transporter un fluide d'irrigation,
une conduite d'alimentation (9) traverse le transducteur (10), et
une interface entre la conduite d'alimentation (9) et le canal de fluide d'irrigation (18) du transducteur (10) est située en aval dudit au moins un élément piézoélectrique (12),
la conduite d'alimentation (9) traverse une masse arrière (13) du transducteur,
l'outil (1) comprend une section de modification de canal (21, 22) traversée par le fluide d'irrigation pendant le fonctionnement de l'outil (1),
la section de modification de canal (21, 22) est formée par
-- une section de paroi intérieure du canal de fluide d'irrigation (8), qui est inclinée par rapport à la direction de vibration (VD) d'un angle compris entre 30° et 150°, et/ou
-- une interface entre une conduite d'alimentation (9) et le canal de fluide d'irrigation (18) du transducteur (10),
pour réduire l'influence des vibrations du transducteur sur le fluide d'irrigation pendant le fonctionnement de l'outil (1), le rapport entre
- une distance (D1, D2) entre la section de modification de canal (21, 22) et ledit au moins un élément piézoélectrique (12), mesurée dans une direction parallèle à la direction de vibration (VD), et
- une longueur totale (L) du transducteur (10), mesurée dans une direction parallèle à la direction de vibration (VD),
est inférieur à 0,15 et, de préférence, inférieur à 0,1.

2. Outil (1) selon la revendication 1,
dans lequel le canal de fluide d'irrigation (8) comprend une section exempte de modification de canal (TF) s'étendant de la section de modification de canal (21, 22) à une extrémité distale du canal de fluide d'irrigation (8).

3. Outil (1) selon la revendication 2,
dans lequel le canal de fluide d'irrigation (8) présente une section transversale dans un plan perpendiculaire à la direction de vibration (VD),
la section transversale de la section exempte de modification de canal (TF) présente une extension inférieure à 2 mm, de préférence inférieure à 1 mm et de manière particulièrement préférée inférieure à 0,75 mm.

4. Outil (1) selon la revendication 2 ou 3,
dans lequel le rapport entre une extension des sections de modification de canal (21, 22) et une longueur totale (L) du transducteur (10) est inférieur à 0,25, de préférence inférieur à 0,2 et de manière particulièrement préférée inférieur à 0,15.

5. Outil (1) selon l'une des revendications précédentes,
dans lequel une sortie d'irrigation (14) est disposée à l'extrémité du canal de fluide d'irrigation (8) pour éjecter le fluide d'irrigation le long d'une direction d'éjection,
de préférence, le rapport entre un diamètre du canal de fluide d'irrigation (8) et une longueur de la section exempte de modification de canal (TF) présente une valeur comprise entre 0,01 et 0,04, de préférence entre 0,02 et 0,03 ou de manière particulièrement préférée entre 0,02 et 0,025.

6. Outil (1) selon l'une des revendications précédentes,
dans lequel la conduite d'alimentation (9) est insérée dans une face avant proximale du transducteur (10), en particulier dans la face avant proximale de la sonotrode (11).

7. Outil (1) selon la revendication 6,
dans lequel un élément d'étanchéité (19), tel qu'un joint torique, est disposé
- entre la partie insérée de la conduite d'alimentation (9) et le transducteur (10), en particulier la sonotrode (11), et/ou
- à un noeud de vibration pendant le fonctionnement.

8. Outil (1) selon l'une des revendications précédentes,
dans lequel un élément d'enfichage (20) comprenant la conduite d'alimentation (9) présente au moins une protubérance (25) s'étendant radialement.

9. Outil (1) selon la revendication 8, dans lequel un élément connecteur ^ (40) est disposé à l'extrémité arrière de l'outil (1), l'élément connecteur (40) étant de préférence relié à l'élément d'enfichage (20), en particulier par l'intermédiaire d'au moins une protubérance (25) s'étendant radialement.

10. Outil (1) selon l'une des revendications précédentes,
dans lequel un espace libre (35) est disposé entre l'élément d'enfichage (20) et la masse arrière (13) dans une direction parallèle à la direction de vibration (VD).

11. Outil (1) selon l'une des revendications précédentes,
dans lequel la pointe (2) de l'outil est reliée à la sonotrode (11) par une liaison par ajustement pressé ou de manière permanente.

12. Outil (1) selon l'une des revendications précédentes,
dans lequel la pointe (2) de l'outil est non-courbée.
